# EUROPÄISCHE PATENTSCHRIFT

(11) **EP 1 273 951 B1**
(45) Veröffentlichungstag und Bekanntmachung des Hinweises auf die Patenterteilung: **21.12.2005**
(21) Anmeldenummer: 02100762.0
(22) Anmeldetag: 28.06.2002
(51) Int. Cl.: G02B 21/00, G01F 3/02

(54) **Scanmikroskop und Verfahren zur wellenlängenabhängigen Detektion**
Scanning microscope and method for the wavelength dependent detection
Microscope à balayage et méthode de detection dependant de la longueur d'onde

(30) Priorität: 05.07.2001 DE 10132638
(43) Veröffentlichungstag der Anmeldung: 08.01.2003
(73) Patentinhaber: Leica Microsystems Heidelberg GmbH, 68165 Mannheim (DE)
(72) Erfinder: Engelhardt, Johann, Dr., 76669, Bad Schönborn (DE); Knebel, Werner Dr., 76709, Kronau (DE)
(74) Vertreter: Reichert, Werner Franz

(56) Entgegenhaltungen:
- EP-A- 0 840 101
- DE-A- 19 829 944
- DE-A- 19 902 625
- US-A- 4 745 273
- US-A- 5 329 352
- US-A- 5 945 669
- TIZIANI H J ET AL: "THREE-DIMENSIONAL IMAGE SENSING BY CHROMATIC CONFOCAL MICROSCOPY" APPLIED OPTICS, OPTICAL SOCIETY OF AMERICA,WASHINGTON, US, Bd. 33, Nr. 10, 1. April 1994 (1994-04-01), Seiten 1838-1843, XP000434202 ISSN: 0003-6935

## Beschreibung

Die Erfindung betrifft ein Scanmikroskop zur Untersuchung einer Probe mit mindestens einem optischen Bauteil, das eine wellenlängenabhängige Charakteristik aufweist, und mit einer Vorrichtung zur wellenlängenabhängigen Detektion und Aufnahme von Messwerten in zumindest zwei Wellenlängenbereichen.

Weiterhin betrifft die Erfindung ein Verfahren zur Detektion des von einer Probe ausgehenden Detektionslichts in Wellenlängenbereichen mit einem Scanmikroskop.

In der Scanmikroskopie wird eine Probe mit einem Lichtstrahl beleuchtet, um das von der Probe emittierte Detektionslicht, als Reflexions- oder Fluoreszenzlicht, zu beobachten. Der Fokus eines Beleuchtungslichtstrahles wird mit Hilfe einer steuerbaren Strahlablenkeinrichtung, im Allgemeinen durch Verkippen zweier Spiegel, in einer Probenebene bewegt, wobei die Ablenkachsen meist senkrecht aufeinander stehen, so dass ein Spiegel in x-, der andere in y-Richtung ablenkt. Die Verkippung der Spiegel wird beispielsweise mit Hilfe von Galvanometer-Stellelementen bewerkstelligt. Die Leistung des vom Objekt kommenden Detektionslichtes wird in Abhängigkeit von der Position des Abtaststrahles gemessen und die so ermittelten Detektionswerte Positionswerten zugeordnet. Üblicherweise werden zur Ermittlung der Positionswerte die Stellelemente mit Sensoren ausgerüstet, die die jeweils aktuelle Spiegelstellung ermitteln.

Speziell in der konfokalen Scanmikroskopie wird ein Objekt mit dem Fokus eines Lichtstrahles in drei Dimensionen abgetastet.

Ein konfokales Rastermikroskop umfasst im Allgemeinen eine Lichtquelle, eine Fokussieroptik, mit der das Licht der Quelle auf eine Lochblende - die sog. Anregungsblende - fokussiert wird, einen Strahlteiler, eine Strahlablenkeinrichtung zur Strahlsteuerung, eine Mikroskopoptik, eine Detektionsblende und die Detektoren zum Nachweis des Detektions- bzw. Fluoreszenzlichtes. Das Beleuchtungslicht wird über einen Strahlteiler eingekoppelt. Das vom Objekt kommende Fluoreszenz- oder Reflexionslicht gelangt über die Strahlablenkeinrichtung zurück zum Strahlteiler, passiert diesen, um anschließend auf die Detektionsblende fokussiert zu werden, hinter der sich die Detektoren befinden. Diese Detektionsanordnung wird Descan-Anordnung genannt. Detektionslicht, das nicht direkt aus der Fokusregion stammt, nimmt einen anderen Lichtweg und passiert die Detektionsblende nicht, so dass man eine Punktinformation erhält, die durch sequentielles Abtasten des Objekts mit dem Fokus des Beleuchtungslichtstrahles zu einem dreidimensionalen Bild führt. Meist wird ein dreidimensionales Bild durch schichtweise Bilddatennahme erzielt.

Aus der deutschen Offenlegungsschrift 198 29 944 A1 ist ein Verfahren zur Gerätekonfiguration, vorzugsweise von Laser-Scan-Mikroskopen, bekannt, bei denen Laserlicht mit einer oder mehreren Spektrallinien erzeugt und auf eine Probe gerichtet wird, die einen Fluoreszenzfarbstoff enthält oder auf die ein Fluoreszenzfarbstoff aufgebracht ist. Dabei werden die Excitationswellenlängen und die Emissionswellenlängen verschiedener Fluoreszenzfarbstoffe in getrennten Datensätzen erfasst und diese in einem Datenspeicher abgelegt. Ebenso werden die mit dem Mikroskop einstellbaren Laserspektren, die auf die Probe zu richten sind, und die mit den vorhandenen Filtern erzielbaren Transmissionsspektren in Datensätzen erfasst und diese Datensätze gespeichert. Aus einer rechnerischen Verknüpfung dieser Datensätze werden Vorgaben für die Konfiguration des Mikroskops ermittelt. Die Gerätekonfiguration betrifft die Auswahl der Laserlinie des Excitationslasers und die Auswahl von geeigneten Filtern.

Aus der Offenlegungsschrift DE 4330347 A1 ist eine Vorrichtung zur Selektion und Detektion mindestens zweier Spektralbereiche eines Lichtstrahls, mit einer Selektionseinrichtung und einer Detektionseinrichtung bekannt. Die Vorrichtung ist zur zuverlässigen gleichzeitigen Selektion und Detektion unterschiedlicher Spektralbereiche bei hoher Ausbeute und bei einfachster Konstruktion derart ausgestaltet, dass die Selektionseinrichtung Mittel zur spektralen Zerlegung des Lichtstrahls und Mittel einerseits zum Ausblenden eines ersten Spektralbereichs und andererseits zur Reflexion zumindest eines Teils des nicht ausgeblendeten Spektralbereichs und die Detektionseinrichtung einen im Strahlengang des ausgeblendeten ersten Spektralbereichs angeordneten ersten Detektor und einen im Strahlengang des reflektierten Spektralbereichs angeordneten zweiten Detektor umfasst. Als Mittel zum Ausblenden eines ersten Spektralbereichs und andererseits zur Reflexion zumindest eines Teils des nicht ausgeblendeten Spektralbereichs ist vorzugsweise eine Spaltblendenvorrichtung mit verspiegelten Blendenbacken vorgesehen. Die Vorrichtung ist insbesondere als Multibanddetektor in einem Scanmikroskop einsetzbar.

Die bekannten Scanmikroskope und die bekannten Verfahren haben den Nachteil, dass eine weitgehend genaue quantitative spektrale Analyse des von einer Probe ausgehenden Lichtes nicht möglich ist.

Der Erfindung liegt daher die Aufgabe zugrunde, ein Scanmikroskop vorzuschlagen, das eine quantitative spektrale Untersuchung des Emissionslichtes einer Probe in zumindest zwei Wellenlängenbereichen ermöglicht.

Obige Aufgabe wird durch ein Scanmikroskop gemäß Anspruch 1 gelöst.

Es ist weiterhin Aufgabe der Erfindung, ein Verfahren anzugeben, das eine quantitative spektrale Untersuchung des Emissionslichtes einer Probe ermöglicht.

Diese Aufgabe wird durch ein Verfahren gemäß Anspruch 5 gelöst:

Es wurde erfindungsgemäß erkannt, dass nicht ausschließlich die Auswahl der Wellenlänge des Anregungslichtes und/oder der Farbfilter Einfluss auf die Messwerte, die aus dem von der Probe ausgehenden Lichts gewonnen werden, hat.

Zur wellenlängenabhängigen Detektion des von der Probe ausgehenden Lichtes wird in einer bevorzugten Ausgestaltung eine Vorrichtung, die ein spektral selektives Element beinhaltet, eingesetzt, das als Prisma, als Gitter, als Hologramm, als Filter oder als dichroitischer Filter ausgeführt ist. Insbesondere Prismen weisen eine nichtlineare wellenlängenabhängige Charakteristik auf. Innerhalb eines durch räumliche Aufspaltung mit einem Prisma erzeugten Spektrums gehören zu gleich breiten räumlichen Abschnitten unterschiedlich breite spektrale Abschnitte. In der bevorzugten Ausgestaltung ist daher vorgesehen, diesen nichtlinearen Zusammenhang in einer Messreihe zu ermitteln und als Datensatz zu speichern, um diese Daten entweder bei der Aufnahme von Messwerten oder bei der Verwertung der Messwerte in Form einer Korrektur mit den Detektions- und/oder Positionswerten zu berücksichtigen. Vorzugsweise ist das Scanmikroskop derart ausgestaltet, dass die spektrale Breite der Wellenlängenbereiche von der spektralen Lage der Wellenlängenbereiche letztlich unabhängig ist.

Die Berücksichtigung bei der Aufnahme der Messwerte ist bei einem Multibanddetektor mit einer Spaltblendenanordnung durch eine Veränderung des Spaltabstandes in Abhängigkeit der spektralen Lage realisiert. Vorzugsweise wird die Breite des Spaltabstandes derart gesteuert, dass die spektrale Breite der Wellenlängenbereiche von der spektralen Lage der Wellenlängenbereiche unabhängig ist.

In einer anderen Ausführungsvariante beinhaltet das Scanmikroskop eine Detektionsblende, deren Öffnungsweite verstellbar ist. Die wellenlängenabhängige Charakteristik ist in diesem Fall eine Eigenschaft der Detektionsblende. Besonders vorteilhaft ist eine Ausgestaltung, bei der die Öffnungsweite der Detektionsblende in Abhängigkeit von der spektralen Lage der Wellenlängenbereiche veränderbar ist. Insbesondere den unterschiedlichen Fokusdurchmessern von Detektionslicht unterschiedlicher Wellenlängenbereiche wird so wirkungsvoll Rechnung getragen. Diese Ausführung ist besonders bei konfokalen Scanmikroskopen von Vorteil.

Mit den beschriebenen Ausgestaltungen sind alle wellenlängenabhängigen Charakteristika der Bauteile eines Scanmikroskops berücksichtigbar. Eine wellenlängenabhängige Charakteristik ist meist auch eine Eigenschaft eines Strahlteilers.

In einer besonders bevorzugen Ausführung ist eine Kalibrierung der Vorrichtung zur wellenlängenabhängigen Detektion anhand der ermittelten wellenlängenabhängigen Charakteristik vorgesehen.

In der Zeichnung ist der Erfindungsgegenstand schematisch dargestellt und wird anhand der Figuren nachfolgend beschrieben, wobei gleich wirkende Elemente mit denselben Bezugszeichen versehen sind. Dabei zeigen:
- Fig. 1: ein Vergleichsbeispiel für Scanmikroskop und
- Fig. 2: ein erfindungsgemäßes Scanmikroskop.

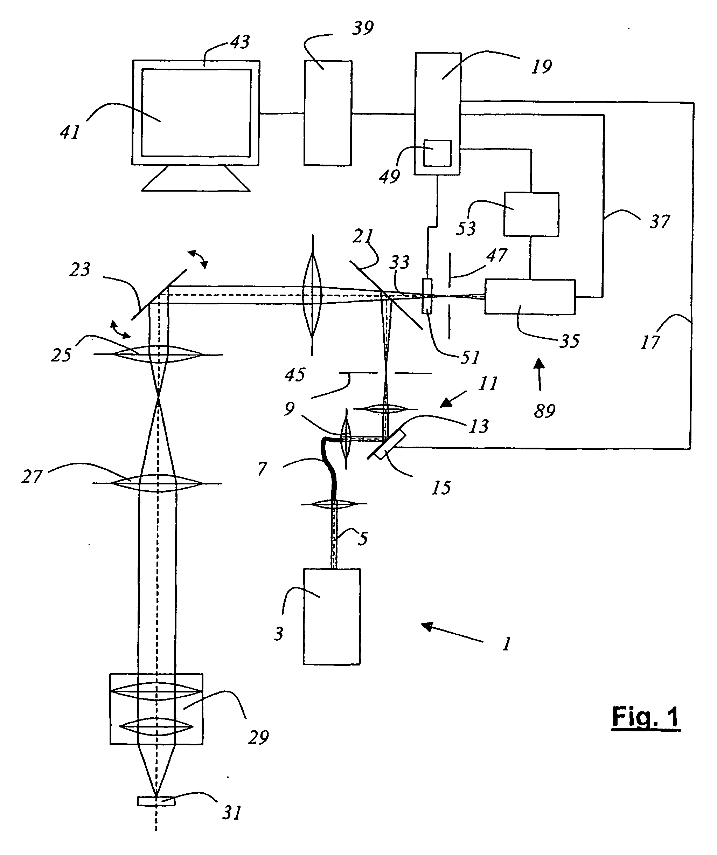

Fig. 1 zeigt schematisch ein Vergleichsbeispiel für ein Scanmikroskop, das als konfokales Scanmikroskop ausgeführt ist. Der von einem Beleuchtungssystem 1, das als Laser 3 ausgeführt ist, kommende Beleuchtungslichtstrahl 5 wird über eine Glasfaser 7 transportiert und trifft nach der Auskopplung aus der Glasfaser 7 mit Hilfe der Optik 9 auf eine Vorrichtung zur Ermittlung der Leistung 11, die mit einem Strahlteiler 13 einen Messstrahl aus dem Beleuchtungslichtstrahl 5 abteilt und dem Detektor 15 zuführt. Der Detektor 15 erzeugt ein zur Leistung des Beleuchtungslichtstrahles 5 proportionales elektrisches Signal, das über die Leitung 17 an die Verarbeitungseinheit 19 geleitet wird. Über einen Strahlteiler 21 gelangt der Beleuchtungslichtstrahl 5 zum kardanisch aufgehängten Scanspiegel 23, der den Beleuchtungslichtstrahl 5 durch die Scanoptik 25, die Tubusoptik 27 und das Objektiv 29 hindurch über bzw. durch die Probe 31 führt. Der Beleuchtungslichtstrahl 5 wird bei nicht transparenten Proben 31 über die Probenoberfläche geführt. Bei biologischen Proben 31 (Präparaten) oder transparenten Proben kann der Beleuchtungslichtstrahl 5 auch durch die Probe 31 geführt werden. Dies bedeutet, dass verschiedene Fokusebenen des Objekts nacheinander durch den Beleuchtungslichtstrahl 5 abgetastet werden. Die nachträgliche Zusammensetzung ergibt dann ein dreidimensionales Bild der Probe. Das von der Probe ausgehende Detektionslicht 33 gelangt durch das Objektiv 29, die Tubusoptik 27 und die Scanoptik 25 hindurch und über den Scanspiegel 23 zum Strahlteiler 21, passiert diesen und trifft nach Passieren eines Filterrades 51 auf eine Detektorvorrichtung 35, die als Photomultiplier ausgeführt ist. In der Detektorvorrichtung 35 werden elektrische, zur Leistung des Detektionslicht proportionale elektrische Detektionssignale erzeugt und über die Leitung 37 an die Verarbeitungseinheit 19 weitergegeben. In der Verarbeitungseinheit 19 erfolgt das Verwerten der Messwerte. Dies beinhaltet unter anderem das Zuordnen von Positionssignalen zu den jeweiligen Messwerten. Die Positionssignale werden beispielsweise aus der Stellung des kardanisch aufgehängten Scanspiegels 23 für jeden Rasterpunkt ermittelt. In der Verarbeitungseinheit werden aus den Messwerten Bilddaten erzeugt, die mit einem PC 39 zu einem Bild 41 aufbereitet werden, das auf dem Monitor 43 dargestellt ist. Das bei einem konfokalen Scanmikroskop üblicherweise vorgesehene Beleuchtungspinhole 45 und das Detektionspinhole 47 sind der Vollständigkeit halber schematisch eingezeichnet. Weggelassen sind wegen der besseren Anschaulichkeit hingegen einige optische Elemente zur Führung und Formung der Lichtstrahlen. Diese sind einem auf diesem Gebiet tätigen Fachmann hinlänglich bekannt. Die Verarbeitungseinheit 19 umfasst einen Speicher 49, in dem die wellenlängenabhängige Charakteristik des optischen Bauteils 89, nämlich der Detektorvorrichtung 35, abgelegt ist. Die als Photomultiplier ausgeführte Detektorvorrichtung 35 weist für Detektionslicht unterschiedlicher Wellenlängen unterschiedliche Empfindlichkeiten auf. Das vor der Detektorvorrichtung 35 angeordnete Filterrad 51 beinhaltet mehrere nicht gezeigte Bandpassfilter, die nacheinander in den Detektionsstrahlengang einbringbar sind. Die Bandpassfilter lassen Licht verschiedener Wellenlängenbereiche des Detektionslichtes 33 zur Detektorvorrichtung 35 passieren. Die Stellung des Filterrades 51 wird an die Verarbeitungseinheit 19 übermittelt, die, anhand dessen und unter Berücksichtigung des im Speicher 49 abgelegten Datensatzes, das Netzgerät 53, das die Hochspannung für den Photomultiplier zur Verfügung stellt, und somit die am Photomultiplier angelegte Spannung steuert. Befindet sich ein Bandpassfilter im Strahlengang, der Detektionslicht passieren lässt, für das die Detektorvorrichtung 35 weniger empfindlich ist, so wird die Spannung am Photomultiplier erhöht. Im gegenteiligen Fall, also bei großer Empfindlichkeit, erfolgt eine Verringerung der Spannung.

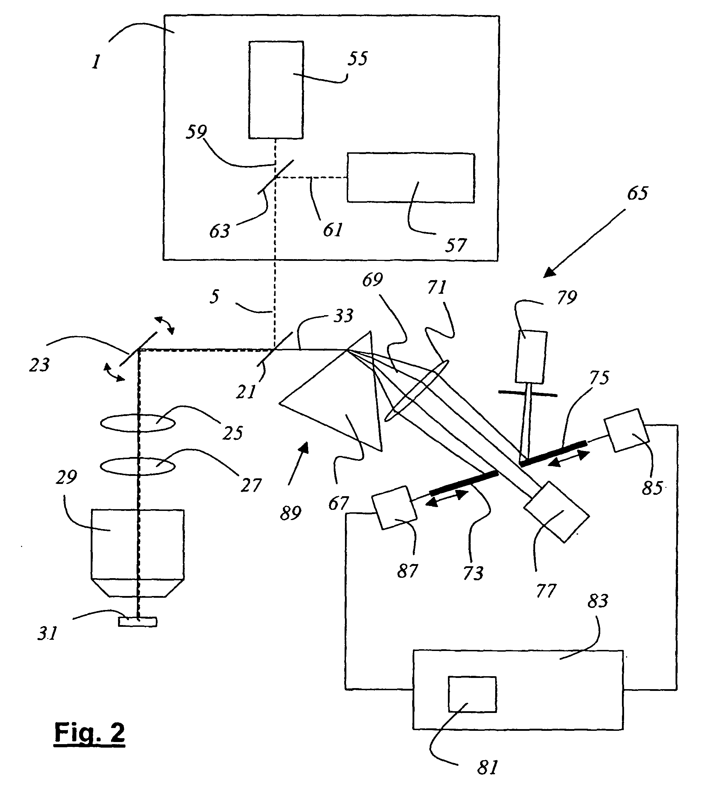

Fig. 2 zeigt ein erfindungsgemäßes Scanmikroskop, dessen Beleuchtungssystem 1 zwei Laser 55, 57 beinhaltet, die einen ersten Lichtstrahl 59 und einen zweiten Lichtstrahl 61 emittieren. Der erste Lichtstrahl 59 und der zweite Lichtstrahl 61 werden mit einem dichroitischen Strahlvereiniger 63 zu einem Beleuchtungslichtstrahl 5 vereinigt. Zur Detektion ist ein Multibanddetektor 65 vorgesehen. Das Detektionslicht 33 wird mit einem optischen Bauteil 89, das als Prisma 67 ausgeführt ist, räumlich spektral aufgespalten. Eine weitere Möglichkeit der spektralen Aufspaltung ist die Verwendung eines Reflexions-, oder Transmissionsgitters oder eines holographischen Gitters. Der spektral aufgespaltene Lichtfächer 69 wird mit der Fokussieroptik 71 fokussiert und trifft anschließend auf eine Spiegelblendenanordnung 73, 75. Die Spiegelblendenanordnung 73, 75, die Mittel zur spektralen, räumlichen Aufspaltung (Prisma 67), die Fokussieroptik 71 und die Detektoren 77 und 79 werden zusammen als Multibanddetektor 65 bezeichnet. Ein Teil des aufgespaltenen Lichtfächers 69 des Detektionslichtes 33, der nur Licht eines vorgewählten Spektralbereichs umfasst, passiert die Spiegelblendenanordnung und wird von dem Detektor 77, der als Photomultiplier ausgeführt ist, delektiert. Ein anderer Teil des aufgespaltenen Lichtfächers 69 wird an der Spiegelblendenanordnung 75 reflektiert und gelangt zu Detektor 79, der ebenfalls als Photomultiplier ausgeführt ist. Die Spiegelblendenanordnungen sind, in den durch die Doppelpfeile illustrierten Richtungen verschiebbar, so dass die spektralen Detektionsbereiche des den Detektoren 77, 79 zugeführten Lichtes kontinuierlich einstellbar sind. Es ist möglich, jedoch der Übersichtlichkeit halber nicht dargestellt, noch weitere Detektoren einzubauen und weiteren Spiegelblenden zuzuordnen. In den Detektoren 77, 79 werden elektrische, zur Leistung des von der Probe 31 ausgehenden Detektionslichtes 33 des jeweiligen Spektralbereichs proportionale Messwerte erzeugt, die in einer Verarbeitungseinheit 83 den in der Strahlablenkeinrichtung 23 mit Hilfe eines Positionssensors erfassten Positionssignalen zugeordnet werden. Anschließend werden sie mit einem PC zu einem Abbild zusammengesetzt. Dieser Vorgang entspricht dem in Fig. 1 gezeigten Vorgang. Weggelassen sind wegen der besseren Anschaulichkeit außerdem einige optische Elemente zur Führung und Formung der Lichtstrahlen. Diese sind einem auf diesem Gebiet tätigen Fachmann hinlänglich bekannt. Das Prisma 67 weist eine besondere wellenlängenabhängige Charakteristik auf. Innerhalb eines durch räumliche Aufspaltung mit dem Prisma 67 erzeugten Spektrums gehören zu gleich breiten räumlichen Abschnitten unterschiedlich breite spektrale Abschnitte. Die Berücksichtigung dieser in Form eines Datensatzes im Speicher 81 einer Verarbeitungseinheit 83 abgelegten wellenlängenabhängigen Charakteristik erfolgt durch Steuerung der Verschiebeantriebe 85, 87 der Spaltblenden 73, 75. Die örtliche Breite des Spaltabstandes wird derart gesteuert, dass die spektrale Breite der detektierten Wellenlängenbereiche von der spektralen Lage der Wellenlängenbereiche unabhängig ist.

Die Erfindung wurde in Bezug auf eine besondere Ausführungsform beschrieben. Es ist jedoch selbstverständlich, dass Änderungen und Abwandlungen durchgeführt werden können, ohne dabei den Schutzbereich der nachstehenden Ansprüche zu verlassen.

## Patentansprüche

1. Scanmikroskop zur Untersuchung einer Probe (31) mit mindestens einem optischen Bauteil (89), das eine wellenlängenabhängige Charakteristik aufweist, und mit einer Vorrichtung zur wellenlängenabhängigen Detektion und Aufnahme von Messwerten in zumindest zwei Wellenlängenbereichen, wobei die Vorrichtung zur wellenlängenabhängigen Detektion und Aufnahme von Messwerten einen Multibanddetektor (65) mit mindestens zwei Detektoren (77, 79) und einer Spaltblendenanordnung (73, 75) umfasst, **dadurch gekennzeichnet, dass** die wellenlängenabhängige Charakteristik des mindestens einen optischen Bauteils (89) in Form eines Datensatzes in einem Speicher (81) abgelegt ist und dass das Scanmikroskop die Daten des Datensatzes bei der Aufnahme der Messwerte in Form einer Korrektur derart berücksichtigt, dass die örtliche Breite des Spalts durch den Datensatz im Speicher (81) einer Verarbeitungseinheit (83) derart verändert wird ist, dass die spektrale Breite der Wellenlängenbereiche am jeweiligen Detektor (77, 79) von der spektralen Lage der Wellenlängenbereiche unabhängig ist.

2. Scanmikroskop nach Anspruch 1, **dadurch gekennzeichnet, dass** die wellenlängenabhängige Charakteristik eine Eigenschaft eines spektral selektiven Elementes, insbesondere eines Prismas oder eines Gitters oder eines Hologramms oder eines Filters, ist.

3. Scanmikroskop nach einem der Ansprüche 1 oder 2, **dadurch gekennzeichnet, dass** das optische Bauteil (89) von der Probe ausgehendes Detektionslicht räumlich spektral aufspaltet.

4. Scanmikroskop nach Anspruch 1, **dadurch gekennzeichnet, dass** eine Verwertung der Messwerte das Erzeugen von Bilddaten und eine Korrektur der Messwerte in einer Verarbeitungseinheit (19, 83) umfasst.

5. Verfahren zur Detektion des von einer Probe (31) ausgehenden Detektionslichts (33) in Wellenlängenbereichen mit einem Scanmikroskop **gekennzeichnet durch** folgende Schritte:
• Ermitteln zumindest einer wellenlängenabhängigen Charakteristik mindestens eines optischen Bauteils (89) des Scanmikroskops,
• Speichern der ermittelten wellenlängenabhängigen Charakteristik des Bauteils des Scanmikroskops in Form eines Datensatzes in einem Speicher (81),
• Aufnehmen von Messwerten mit einer Vorrichtung zur wellenlängenabhängigen Detektion und Verwerten der Messwerte, wobei das Aufnehmen von Messwerten unter Berücksichtigung der wellenlängenabhangigen Charakteristik des optischen Bauteils (89) derart erfolgt, dass von der Vorrichtung zur wellenlängenabhängigen Detektion und Aufnahme von Messwerten ein Multibanddetektor (65) mit mindestens zwei Detektoren und einer Spaltblendenanordnung (73, 75) verwendet wird, wobei die örtliche Breite des Spalts **durch** den Datensatz im Speicher (81) einer Verarbeitungseinheit (83) derart verändert wird, dass die spektrale Breite der Wellenlängenbereiche am jeweiligen Detektor von der spektralen Lage der Wellenlängenbereiche unabhängig ist.

6. Verfahren nach Anspruch 5, **dadurch gekennzeichnet, dass** die wellenlängenabhängige Charakteristik eine Eigenschaft eines spektral selektiven Elementes, insbesondere eines Prismas oder eines Gitters oder eines Hologramms oder eines Filters, ist.

7. Verfahren nach einem der Ansprüche 5 oder 6, **dadurch gekennzeichnet, dass** das optische Bauteil (89) von der Probe ausgehendes Detektionslicht räumlich spektral aufspaltet.

8. Verfahren nach einem der Ansprüche 5 bis 7, **dadurch gekennzeichnet, dass** die Vorrichtung zur wellenlängenabhängigen Detektion anhand der ermittelten wellenlängenabhängigen Charakteristik kalibriert wird.

## Claims

1. Scanning microscope for examining a sample (31), having at least one optical component (89) which has a wavelength-dependent characteristic, and having an apparatus for wavelength-dependent detection and recording of measured values in at least two wavelength regions, the apparatus for wavelength-dependent detection and recording of measured values comprising a multiband detector (65) with at least two detectors (77, 79) and a slit diaphragm arrangement (73, 75), **characterized in that** the wavelength-dependent characteristic of the at least one optical component (89) is stored in the form of a data record in a memory (81), and **in that** the scanning microscope takes account of the data of the data record when recording the measured values in the form of a correction in such a way that the local width of the slit is varied by the data record in the memory (81) of a processing unit (83) in such a way that the spectral width of the wavelength regions at the respective detector (77, 79) is not a function of the spectral position of the wavelength regions.

2. Scanning microscope according to Claim 1,
**characterized in that** the wavelength-dependent characteristic is a property of a spectrally selective element, in particular of a prism or a grating or a hologram or a filter.

3. Scanning microscope according to one of Claims 1 or 2, **characterized in that** detection light emanating from the sample is split up spectrally in three dimensions by the optical component (89).

4. Scanning microscope according to Claim 1,
**characterized in that** an evaluation of the measured values comprises the production of image data and the correction of the measured values in a processing unit (19, 83).

5. Method for detecting the detection light (33), emanating from a sample (31), in wavelength regions with the aid of a scanning microscope **characterized by** the following steps:
• determining at least one wavelength-dependent characteristic of at least, one optical component (89) of the scanning microscope,
• storing the determined wavelength-dependent characteristic of the component of the scanning microscope in the form of a data record in a memory (81), and
• recording measured values with the aid of an apparatus for wavelength-dependent detection and evaluating the measured values, the recording of the measured values being performed by taking account of the wavelength-dependent characteristic of the optical component (89) in such a way that a multiband detector (65) with at least two detectors and a slit diaphragm arrangement (73, 75) is used by the apparatus for wavelength-dependent detection and recording of measured values, the local width of the slit being varied by the data record in the memory (81) of a processing unit (83) in such a way that the spectral width of the wavelength regions at the respective detector is not a function of the spectral position of the wavelength regions.

6. Method according to Claim 5, **characterized in that** the wavelength-dependent characteristic is a property of a spectrally selective element, in particular a prism or a grating or a hologram or a filter.

7. Method according to one of Claims 5 or 6,
**characterized in that** detection light emanating from the sample is split up spectrally in three dimensions by the optical component (89).

8. Method according to one of Claims 5 to 7,
**characterized in that** the apparatus for wavelength-dependent detection is calibrated with the aid of the wavelength-dependent characteristic determined.

## Revendications

1. Microscope à balayage pour examiner un échantillon (31) comprenant au moins un composant optique (89) qui présente une caractéristique dépendante de la longueur d'onde et comprenant un dispositif de détection et d'enregistrement en fonction de la longueur d'onde de valeurs mesurées dans au moins deux plages de longueurs d'onde, le dispositif de détection et d'enregistrement en fonction de la longueur d'onde de valeurs mesurées comprenant un détecteur multibandes (65) avec au moins deux détecteurs (77, 79) et un arrangement de diaphragme à fente (73, 75), **caractérisé en ce que** la caractéristique dépendante de la longueur d'onde de l'au moins un composant optique (89) est enregistrée dans une mémoire (81) sous la forme d'un ensemble de données et que le microscope à balayage tient compte des données de l'ensemble de données lors de l'enregistrement des valeurs mesurées sous la forme d'une correction de telle sorte que la largeur locale de la fente est modifiée par l'ensemble de données dans la mémoire (81) d'une unité de traitement (83) de telle sorte que la largeur spectrale de la plage de longueurs d'onde au niveau du détecteur (77, 79) correspondant est indépendante de la position spectrale des plages de longueurs d'onde.

2. Microscope à balayage selon la revendication 1, **caractérisé en ce que** la caractéristique dépendante de la longueur d'onde est une propriété d'un élément à sélection spectrale, notamment un prisme ou une grille ou un hologramme ou un filtre.

3. Microscope à balayage selon l'une des revendications 1 ou 2, **caractérisé en ce que** le composant optique (89) réalise une décomposition spectrale dans l'espace de la lumière de détection sortant de l'échantillon.

4. Microscope à balayage selon la revendication 1, **caractérisé en ce qu'**une exploitation des valeurs mesurées comprend la génération de données d'image et une correction des valeurs mesurées dans une unité de traitement (19, 83).

5. Procédé de détection de la lumière de détection (33) sortant d'un échantillon (31) dans des plages de longueurs d'onde avec un microscope à balayage par les étapes suivantes :
* Détermination d'au moins une caractéristique dépendante de la longueur d'onde d'au moins un composant optique (89) du microscope à balayage,
* Enregistrement de la caractéristique dépendante de la longueur d'onde déterminée du composant du microscope à balayage sous forme d'un ensemble de données dans une mémoire (81),
* Acquisition de valeurs mesurées avec un dispositif de détection dépendante de la longueur d'onde et exploitation des valeurs mesurées, l'acquisition des valeurs mesurées s'effectuant en tenant compte de la caractéristique dépendante de la longueur d'onde du composant optique (89) de telle sorte qu'un détecteur multibandes (65) comprenant au moins deux détecteurs et un arrangement de diaphragme à fente (73, 75) est utilisé par le dispositif pour la détection dépendante de la longueur d'onde et l'acquisition des valeurs mesurées, la largeur locale de la fente étant modifiée par l'ensemble de données dans la mémoire (81) d'une unité de traitement (83) de telle sorte que la largeur spectrale des plages de longueurs d'onde au niveau du détecteur correspondant soit indépendante de la position spectrale des plages de longueurs d'onde.

6. Procédé selon la revendication 5, **caractérisé en ce que** la caractéristique dépendante de la longueur d'onde est une propriété d'un élément à sélection spectrale, notamment un prisme ou une grille ou un hologramme ou un filtre.

7. Procédé selon l'une des revendications 5 ou 6, **caractérisé en ce que** le composant optique (89) réalise une décomposition spectrale dans l'espace de la lumière de détection sortant de l'échantillon.

8. Procédé selon l'une des revendications 5 à 7, **caractérisé en ce que** le dispositif de détection dépendante de la longueur d'onde est calibré au moyen de la caractéristique dépendante de la longueur d'onde déterminée.
